Europäisches Patentamt

European Patent Office

Office européen des brevets

(19)

(11)  **EP 1 198 415 B1**

(12)  **FASCICULE DE BREVET EUROPEEN**

(45) Date de publication et mention
de la délivrance du brevet:
**26.02.2003  Bulletin 2003/09**

(21) Numéro de dépôt: **00936954.7**

(22) Date de dépôt: **29.05.2000**

(51) Int Cl.⁷: $C01F\ 7/06$, $C02F\ 5/02$

(86) Numéro de dépôt international:
**PCT/FR00/01451**

(87) Numéro de publication internationale:
**WO 00/075073 (14.12.2000 Gazette 2000/50)**

(54)  **PROCEDE D'EPURATION DES LIQUEURS D'ALUMINATE DE SODIUM CONTENANT DE L'OXALATE DE SODIUM PERMETTANT DE VALORISER LES RESIDUS**

VERFAHREN ZUR REINIGUNG VON NATRIUMOXALAT ENTHALTENDE NATRIUMALUMINATLÖSUNGEN MIT VERWERTUNG VON RÜCKSTÄNDEN

METHOD FOR PURIFYING SODIUM ALUMINATE LIQUORS CONTAINING SODIUM OXALATE AND ENHANCING RESIDUES

(84) Etats contractants désignés:
**DE ES FR IE IT**

(30) Priorité:  **04.06.1999  FR 9907231**

(43) Date de publication de la demande:
**24.04.2002  Bulletin 2002/17**

(73) Titulaire: **ALUMINIUM PECHINEY
75218 Paris Cedex 16 (FR)**

(72) Inventeurs:
• **CLERIN, Philippe
F-13119 Saint Savournin (FR)**

• **CRISTOL, Benoît
F-13006 Marseille (FR)**

(74) Mandataire: **Marsolais, Richard et al
Péchiney,
Immeuble "SIS"
217, cours Lafayette
69451 Lyon Cedex 06 (FR)**

(56) Documents cités:
**EP-A- 0 555 163        WO-A-92/19537
WO-A-97/03924**

## Description

### DOMAINE TECHNIQUE

L'invention concerne un procédé d'épuration des liqueurs d'aluminate de sodium résultant de l'attaque alcaline des bauxites selon le procédé Bayer et contenant de l'oxalate de sodium.

### ETAT DE LA TECHNIQUE

On connaît par EP 0 555 163 un procédé de désoxalatation particulièrement efficace qui préconise l'emploi d'un matériau solide, finement divisé et bon marché - la chaux - servant d'amorce à la précipitation de l'oxalate de sodium dans la liqueur d'aluminate décomposée concentrée. En fait, l'oxalate de sodium ne précipite pas directement sur les fines particules de chaux mais sur les produits solides issus de la réaction entre la chaux et la liqueur d'aluminate appartenant à la famille de l'aluminate tricalcique hexahydraté: Al2O3, 3CaO, 6H2O. Nous regrouperons pour la suite de l'exposé l'ensemble de ces produits de réaction sous le vocable "AC3,6".

### PROBLEME POSE

Ce procédé est utilisé dans de nombreuses installations industrielles et donne entière satisfaction pour la plupart des bauxites à traiter. Toutefois, il s'avère assez coûteux dans les installations de forte capacité traitant des bauxites à trihydrate ou mixtes notamment d'origine africaine ou indienne qui sont particulièrement riches en matières organiques, celles-ci étant dégradées au cours de l'attaque alcaline en particulier sous la forme d'une grande quantité d'oxalate de sodium, ce qui nécessite la mise en oeuvre de fréquentes opérations de désoxalatation. Il s'ensuit une grande consommation en chaux et une perte en soude et en alumine entraînées avec les résidus de désoxalatation.

Pour diminuer la consommation en chaux et la perte en alumine et en soude, la demanderesse a cherché, dans WO 97/03924, à recycler l'agent de déstabilisation, c'est-à-dire l'AC3,6 issu de la réaction de la chaux avec la liqueur d'aluminate et qui se présente sous forme de particules finement divisées: au lieu de jeter ces particules recouvertes de l'oxalate de sodium précipité, WO 97/03924 propose de les laver de façon à rediluer l'oxalate de sodium puis de réintroduire ces particules lavées en guise d'amorce de désoxalatation, l'eau de lavage enrichie en oxalate de sodium étant par ailleurs évacuée. Mais la dilution doit être importante et l'implantation industrielle des chaînes de lavage et de filtration nécessitée par cette opération est trop coûteuse pour être facilement amortie par la seule diminution de consommation en chaux. Il n'y a en effet pas diminution de perte en soude et en alumine, l'imprégnation des résidus de désoxalatation partant avec l'eau de lavage.

Le problème reste donc posé de disposer d'un procédé de désoxalatation de la liqueur d'aluminate peu coûteux, utilisant le moins d'agent déstabilisant possible et qui n'augmente pas les pertes en soude et en alumine.

### OBJET DE L'INVENTION

La demanderesse a réussi à résoudre ce problème en perfectionnant son procédé décrit dans EP 0 555 163, c'est-à-dire en utilisant les résidus de désoxalatation par la chaux pour caustifier, c'est-à-dire décarbonater et désoxalater les eaux industrielles, par exemple les eaux utilisées pour la chaîne de lavage des résidus insolubles issus de l'attaque alcaline de la bauxite, appelés "résidus inertes".

La demanderesse a en effet constaté avec surprise que, lavés dans un milieu fortement dilué par les eaux provenant d'installations industrielles telles que les eaux de retour de bassin, les eaux brutes et les eaux distillées sodiques, lesdits résidus de désoxalatation - essentiellement de l'AC3,6 - permettent de caustifier, c'est-à-dire de décarbonater et de désoxalater ces eaux qui peuvent ainsi être redirigées, directement après lavage par patouillage des résidus de désoxalatation, vers les installations industrielles, par exemple vers la chaîne de lavage des résidus inertes. De façon à ce que l'oxalate de sodium puisse se dissoudre, le lavage par patouillage des résidus de désoxalatation doit se faire dans un milieu fortement dilué en soude: la teneur en Na2O totale doit être limitée à 8 g/l et de préférence à 3 g/l.

Les produits solides résultant du patouillage sont évacués. Il s'agit de précipités de carbonate et d'oxalate de calcium. Le composé $CaC_2O_4$, $H_2O$ a été identifié par diffraction X. Ils ont une forme et une taille telles que la séparation liquide - solide peut être effectuée facilement par filtration, et même, en utilisant des adjuvants tels que des polyélectrolytes anioniques, par floculation et décantation.

La demanderesse a donc découvert que l'aluminate tricalcique hexahydraté est capable de précipiter de l'oxalate de calcium dans des conditions de concentration des bassins à boues, avec des concentrations en soude limitées: moins de 10 g Na2O/l. La cinétique de précipitation de l'oxalate de calcium diminuant sensiblement lorsque la concentration en soude augmente, il est préférable de limiter cette concentration à 8 g Na2O/l, l'efficacité optimale du patouillage étant obtenue avec une concentration voisine de 3 g Na2O/l. Cette faible concentration impose d'utiliser beaucoup d'eau ou de veiller à obtenir un taux d'imprégnation des résidus de désoxalatation le plus faible possible. De préférence, on visera un taux d'imprégnation de ces résidus inférieur ou égal à 50 %, qui peut être atteint aisément avec un filtre-presse. La cinétique de précipitation de l'oxalate de calcium diminuant lorsque la température augmente, on cherchera à effectuer ce patouillage dans le domaine de température 40 - 60 °C, de préférence au voisinage de 40°C.

Au cours du patouillage, l'ion oxalate $C_2O_4{}^{2-}$ libéré réagit avec les composés de la famille de l'AC3,6 pour donner de l'oxalate de calcium $CaC_2O_4, H_2O$ qui précipite, de l'aluminate de sodium et de l'hydroxyde de sodium. La désoxalatation se produisant au cours du patouillage peut être schématisée ainsi:

$$3\ CaO,\ Al_2O_3,\ 6H_2O + 6\ Na^+ + 3\ C_2O_4{}^{2-} + 3\ H_2O \leftrightarrow$$

$$3\ CaC_2O_4,\ H_2O + 2\ Na^+ + 2\ [Al(OH)_4]^- + 4\ Na^+ + 4\ OH^-$$

La réaction en fait est plus complexe en raison de la présence de matières humiques non entièrement transformées qui ont coprécipité avec l'oxalate de sodium et repassent en solution au cours du patouillage.

D'autre part certaines eaux industrielles ne sont pas pures. Si elles sont carbonatées - c'est en général le cas avec les eaux de retour de bassin des installations de la chaîne Bayer qui sont riches en carbonate de sodium - l'effet du patouillage se traduit par la précipitation de carbonate de calcium de telle sorte que l'on obtient par la suite une eau décarbonatée qui peut être reconduite vers les installations industrielles d'autant plus avantageusement que celles-ci sont sensibles à l'entartrage des canalisations. La décarbonatation se produisant au cours du patouillage peut être schématisée ainsi:

$$3\ CaO,\ Al_2O_3,\ 6H_2O + 6\ Na^+ + 3\ CO_3{}^{2-} \leftrightarrow$$

$$3\ CaCO_3 + 2\ Na^+ + 2\ [Al(OH)_4]^- + 4\ Na^+ + 4\ OH^-$$

L'ion carbonate $CO_3{}^{2-}$ réagit avec les composés de la famille de l'AC3,6 pour donner du carbonate de calcium $CaCO_3$ qui précipite, de l'aluminate de sodium et de l'hydroxyde de sodium. Ainsi, la décarbonatation effectuée par patouillage avec les résidus de la désoxalatation par la chaux selon EP 0 555 163 permet de générer de la soude libre à partir de carbonate de sodium, produit existant dans les eaux carbonatées ou pouvant être additionné à une eau brute, car il est moins coûteux que la soude. Si les eaux de retour de bassin sont particulièrement carbonatées, il peut se révéler nécessaire de faire un appoint de chaux dans le mélange avant ou au cours du patouillage.

Les eaux de retour de bassin peuvent être elles-mêmes oxalatées c'est souvent le cas avec les eaux de retour de bassin des installations de la chaîne Bayer - et ce traitement permet de les désoxalater avant de les diriger, par exemple, vers la chaîne de lavage des résidus de l'attaque alcaline.

Dans le mode de réalisation préféré du procédé selon l'invention, les eaux de patouillage des résidus de désoxalatation sont mélangées aux eaux entrantes dans la chaîne de lavage des résidus insolubles de l'attaque alcaline de la bauxite. Dans ce cas, l'alumine, la soude, les matières humiques, qui étaient perdus auparavant avec l'évacuation des résidus de désoxalatation, ne sont plus perdues puisque ces eaux décarbonatées et désoxalatées sont réintroduites dans le cycle Bayer. De plus, de la soude soluble, générée autant par la désoxalatation que par la décarbonatation, est introduite par ce biais dans le circuit Bayer.

Dans la chaîne de lavage des résidus inertes, l'eau de lavage circule à contre-courant des résidus solides de l'attaque alcaline, qui passent dans une série de bacs appelés laveurs. Dans chacun de ces bacs, les particules solides tombent au fond par décantation et la sous-verse est pompée pour alimenter le bac laveur suivant. En sens inverse, l'eau de lavage se concentre petit à petit en alumine et en soude, le clair de chaque laveur alimentant le laveur précédent. A la fin de cette chaîne circulant à contre-courant, le clair du premier laveur est utilisé pour diluer et refroidir la suspension d'aluminate de sodium du circuit Bayer résultant de l'attaque alcaline de la bauxite, ce qui favorise la séparation de la liqueur d'aluminate des résidus insolubles - par exemple par décantation - et initie la décomposition de la liqueur d'aluminate, phénomène de précipitation complexe à cinétique lente.

En général, l'homme du métier effectue une opération de caustification du clair de l'un des laveurs (le second par exemple) pour décarbonater l'eau de la chaîne de lavage: celle-ci, devant être introduite dans la liqueur d'aluminate, doit comporter le moins d'ions carbonates possible pour, entre autres, améliorer la productivité des liqueurs Bayer et éviter l'entartrage des canalisations constituant le circuit Bayer. Grâce à l'invention, l'utilisation dans la chaîne de lavage d'eaux décarbonatées à la suite du patouillage avec les résidus de désoxalatation permet dans certains cas, notamment lorsqu'on utilise des eaux de retour de bassin, d'alléger la caustification effectuée sur le clair de l'un des laveurs de la chaîne de lavage.

Puisque l'alumine, la soude et les matières humiques ne sont pas évacuées avec les résidus de désoxalatation, puisque de la soude soluble est générée par le patouillage, l'eau totale entrant dans la chaîne de lavage, qui est le mélange de ces eaux traitées et du reste des eaux de lavage, est un peu plus concentrée en alumine et en soude. Du fait de cette plus forte concentration à l'entrée de la chaîne de lavage, la perte en alumine et en soude entraînées par l'évacuation des résidus inertes est un peu plus grande mais le bilan global est positif puisque la majeure partie, non évacuée, de l'alumine, de la soude et des matières humiques remonte à contre-courant du lavage des résidus inertes puis est versée dans la suspension d'aluminate issue de l'attaque dans le but de diluer cette suspension avant décantation et décomposition.

Le retour de matières humiques dans le cycle Bayer est bénéfique puisqu'il régularise la concentration en matières humiques de la liqueur d'aluminate. La demanderesse a en effet constaté que les matières humiques présentes dans la liqueur d'aluminate diminuent le risque de précipitation prématurée des oxalates au cours de la décomposition de la liqueur et qu'il est souhaitable de maintenir une concentration la plus régulière possible de ces matières humiques dans la liqueur d'aluminate.

En cas d'utilisation d'eaux de retour de bassin, le patouillage de ces eaux avec les résidus de désoxalatation par la chaux selon l'invention permet de réduire notablement la consommation de chaux utilisée dans la chaîne de lavage pour la décarbonatation du clair de laveur.

Les produits solides résultant du patouillage avec les résidus de désoxalatation sont facilement isolés des eaux redirigées vers les installations industrielles. Leur évacuation présente un avantage par rapport au procédé décrit dans EP O 555 163 car on évacue ici des résidus constitués essentiellement de carbonate et d'oxalate de calcium, qui sont des produits chimiquement inertes vis-à-vis de l'environnement.

## MODES DE REALISATION DE L'INVENTION - EXEMPLES

La réalisation de l'invention sera mieux comprise à partir de la description des exemples qui suivent.

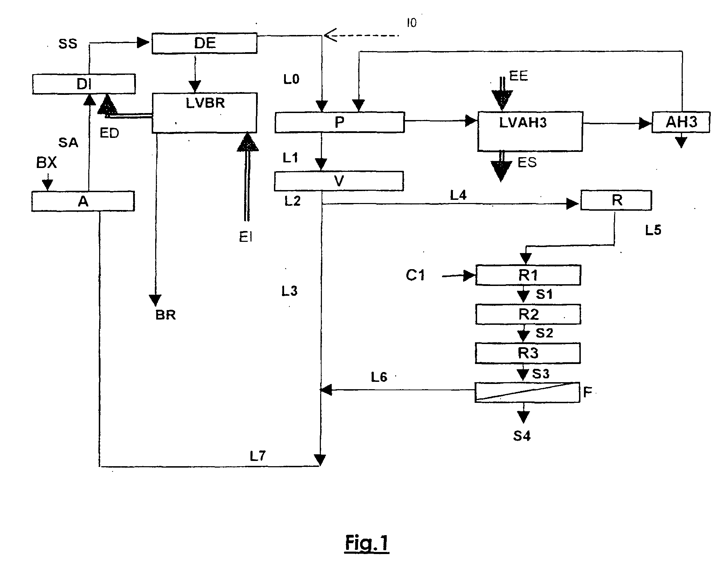

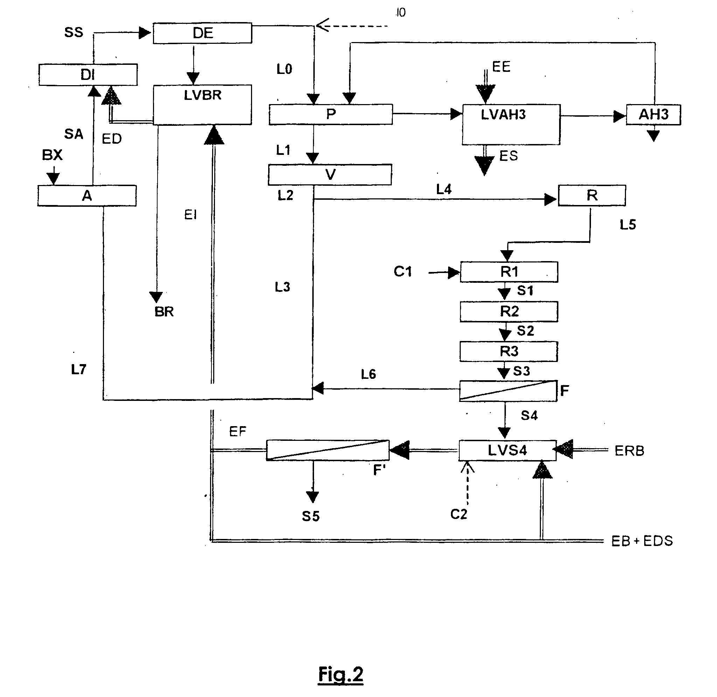

L'exemple 1, illustré en figure 1 et pris comme référence, est très voisin de l'exemple 3 de EP 0 555 163. L'exemple 2, illustré en figure 2, décrit le perfectionnement apporté selon la présente invention au procédé de désoxalatation de EP 0 555 163, dans lequel on utilise pour le patouillage des eaux distillées sodiques issues de l'exploitation industrielle d'un circuit Bayer. L'exemple 3, également illustré en figure 2, décrit le perfectionnement apporté selon la présente invention au procédé de désoxalatation de EP 0 555 163, dans lequel on utilise pour le patouillage des eaux de retour de bassin fortement carbonatées d'une installation industrielle exploitant un circuit Bayer.

Dans les deux figures, les flux des eaux - de lavage ou de patouillage - sont représentés par des doubles traits.

## EXEMPLES

### Exemple 1 (référence de l'art antérieur)

Selon la figure 1, la liqueur d'aluminate sursaturée L0, éventuellement additionnée d'un polyélectrolyte anionique 10 destiné à relever si nécessaire le seuil de sursaturation critique en oxalate, est décomposée (P). Après séparation du trihydroxyde d'aluminium précipité, la liqueur d'aluminate résultante, dite liqueur décomposée, L1 est concentrée par évaporation (V) de sorte que sa concentration en soude caustique soit comprise entre 170 et 250 g Na2O/litre, de préférence entre 190 et 210 g Na2O/litre.

Une fraction L4 est prélevée pour subir le traitement de désoxalatation puis, une fois traitée, la fraction L6 est mélangée à la fraction principale L3 pour former une liqueur L7 d'attaque alcaline (A) du minerai BX. La suspension d'aluminate SA issue de l'attaque alcaline (A) est ensuite refroidie et diluée (DI) avec l'eau ED issue du lavage (LVBR) à contre courant des résidus insolubles BR résultant de l'attaque alcaline. Les eaux industrielles EI utilisées pour cette chaîne de lavage sont des eaux brutes, des eaux distillées sodiques ou encore, si l'installation le permet, des eaux de retour de bassin. La suspension sursaturée SS est ensuite versée dans un décanteur (DE) pour séparer ces résidus insolubles BR de la liqueur d'aluminate sursaturée L0.

La fraction L4 prélevée pour désoxalatation dans la liqueur décomposée concentrée L2 représente de préférence 4 à 6 % du volume de ladite liqueur décomposée concentrée L2. L'importance de la fraction à prélever est déterminée par la quantité d'oxalate de sodium qu'il faut éliminer à chaque cycle pour éviter un empoisonnement progressif de la liqueur en oxalate de sodium et tout risque de précipitation intempestive de cet oxalate sur les grains de trihydroxyde d'aluminium lors de la décomposition.

Après refroidissement (R) à une température comprise entre 40 et 60°C, la liqueur refroidie L5 dont le seuil de sursaturation critique de la teneur en oxalate de sodium est atteint, voire dépassé, est mise en contact avec de la chaux vive C1 finement divisée dans un premier réacteur agité R1, pour former une suspension homogène S1 de concentration comprise de préférence entre 7 et 9 g de CaO par litre de liqueur L5.

La suspension S1 ainsi. formée est transférée dans un second réacteur agité R2 puis un troisième R3. Le temps total de mise en contact chaux vive - liqueur d'aluminate est compris entre 3 et 5 heures. La suspension S3 sortant du troisième réacteur agité R3 est filtrée. Cette filtration (F), réalisée sur filtre presse est très rapide, de l'ordre de 1,5 m$^3$/.heure de suspension par m$^2$ de surface filtrante.

Après filtration et essorage, le gâteau d'insolubles S4 dont la teneur en Na2O libre est inférieure à 3 % est mélangé aux résidus inertes pour mise en décharge. La liqueur L6, appauvrie en oxalate de sodium avec une concentration comprise entre 0,15 et 0,25 % de carbone oxalique rapporté à la soude caustique est mélangée avec la fraction principale L3 de liqueur non désoxalatée pour former une liqueur alcaline L7 recyclée comme liqueur d'attaque du minerai de bauxite.

On traite ici 40 m3/h de liqueur industrielle L4 prélevée dans le circuit de liqueur décomposée et concentrée L2 dont le débit est de 1000 m3/h. Cette liqueur provient essentiellement de l'attaque alcaline à 105°C d'une bauxite tropicale à trihydrates. La liqueur L4 prélevée avait la composition suivante:

Na2O caustique: 205 g/l
Na2O carbonatée: 24 g/l
Al2O3= 120 g/l
Oxalate de sodium exprimé en Cox (carbone oxalique): 0,88 g Cox/l (soit Cox/Na2Octq = 0.43% et Cox/Na2Otot: 0,39%)

Après refroidissement à 50°C, la liqueur refroidie L5 est mélangée à 320 kg/h de chaux vive pour former une suspension homogène de concentration 8 g CaO/litre et après 3 heures de mise en contact en réacteur agité, la suspension présentant un volume de 40 m3 est filtrée en moins de une heure sur un filtre de 30 m2.

Après essorage, le gâteau insoluble humide S4 titre 3% de soude libre exprimée en Na2O et la liqueur L6 est renvoyée dans le circuit Bayer en la mélangeant à la fraction non prélevée de la liqueur décomposée concentrée L3, représentant un débit de 960 m3/h. La liqueur L6 contient seulement 0,37 g Cox / l (Cox/Na2Octq = 0.18%).

Lors de ce traitement, environ 21 kg/h de carbone oxalique, correspondant à 117 kg/h d'oxalate de sodium cristallisé, est éliminé.

Après essorage, le gâteau insoluble S4 humide imprégné est évacué à raison de 1680 kg/h. L'oxalate précipité entraîne la perte de 108 kg/h de soude exprimée en Na2O. L'imprégnation contient de la soude liée à l'alumine (environ 30 kg/h), de la soude carbonatée (environ 75 kg/h) et de la soude libre (NaOH) dont la perte, exprimée en terme de Na2O, est de l'ordre de 55 kg/h. La perte en soude totale est de l'ordre de 270 kg/h.

L'évacuation des résidus de désoxalatation entraîne donc une perte de:

- ≈320 kg/h de chaux vive
- ≈270 kg/h de soude totale
- ≈225 kg/h d'alumine, qu'elle soit insoluble ou qu'elle soit entraînée dans l'imprégnation.

Cette évacuation entraîne également la perte des matières humiques qui ont coprécipité avec l'oxalate de sodium. Suivant le cycle Bayer, cette perte peut se situer entre 10 et 20 kg/h de matières humiques.

**Exemple 2 (Figure 2) - Patouillage des résidus de désoxalatation avec un mélange d'eaux brutes et d'eaux distillées sodiques.**

La figure 2 montre le traitement de désoxalatation précédent perfectionné par la valorisation des résidus de désoxalatation. Dans cet exemple, le patouillage n'est effectué qu'avec des eaux brutes et des eaux distillées sodiques.

Le gâteau insoluble S4 obtenu par filtration (F) est entraîné avec son imprégnation vers un bac où il est lavé (LVS4) par patouillage avec les eaux distillées sodique EDS à raison de 120 m$^3$/h. Après un temps de séjour de 2 heures, le mélange est ensuite filtré.

Le résidu est essentiellement constitué d'oxalate et de carbonate de calcium. Son imprégnation est très diluée en soude, ce qui entraîne une perte en soude inférieure à 1 kg/h. Son évacuation se fait dans des conditions non agressives vis-à-vis de l'environnement.

Le filtrat EF est mélangé au reste des eaux de lavage. L'eau de la chaîne de lavage EI est un peu plus concentrée en soude et en alumine en raison de l'apport de l'eau issue du patouillage. Cette concentration légèrement plus forte est à l'origine de pertes en soude soluble dans la chaîne de lavage un peu plus grandes: de l'ordre de 186 kg /h alors qu'elles s'élevaient à 104 kg/h environ lorsque les eaux de lavage ne suivaient pas le traitement selon l'invention.

Le bilan est positif puisque:

- les 270 kg/h de soude totale perdue dans le procédé de l'art antérieur sont récupérés en partie dans le cycle Bayer, la perte globale étant ramenée à 82 kg/h environ.

- les 225 kg/h d'alumine perdus dans le procédé d'origine sont en majeure partie réintroduits dans le cycle Bayer. La perte globale en alumine est ramenée à 42 kg/h environ.
- alors que dans le procédé de l'art antérieur, on perdait - avec l'évacuation de l'imprégnation - 55 kg/h de soude libre, les 320 kg/h de chaux destinés à la désoxalatation ont généré 51 kg/h de soude libre mais l'excès de perte en soude libre au niveau de l'évacuation des résidus insolubles est ici de 50 kg/h: la deuxième utilisation des 320 kg/h de chaux a ainsi permis de récupérer pratiquement la soude libre perdue dans l'art antérieur.

**Exemple 3 - (Figure 2) Patouillage des résidus de désoxalatation avec des eaux de retour de bassin**

Dans cet exemple, le patouillage n'est effectué qu'avec des eaux de retour de bassin (ERB).

Ces dernières ont une concentration en soude totale de 1,5 g/l; elles sont fortement carbonatées et sont riches en oxalates. L'introduction de telles eaux dans la chaîne de, lavage représente une quantité de 84 kg/h de soude carbonatée et de 0,6 kg/h d'oxalate exprimé en carbone oxalique (Cox). La perte en $Na_2O$ totale soluble au niveau de l'évacuation des résidus insolubles représente alors 202 kg/h, valeur à comparer aux 104 kg/h relatifs à l'emploi d'eaux brutes et d'eaux distillées sodiques de l'exemple précédent.

Le gâteau insoluble S4 obtenu par filtration (F) est entraîné avec son imprégnation vers un bac où il est lavé (LVS4) par patouillage avec les eaux de retour de bassin à raison de 120 m$^3$/h. Après un temps de séjour de 2 heures, le mélange est ensuite filtré. Il n'a pas été nécessaire dans ce cas d'effectuer un appoint de calcium C2 pour compléter la décarbonatation.

Le résidu est essentiellement constitué d'oxalate et de carbonate de calcium. Son imprégnation est très diluée en soude, ce qui entraîne une perte en soude inférieure à 1,5 kg/h. Son évacuation se fait dans des conditions non agressives vis-à-vis de l'environnement.

Le filtrat EF est mélangé au reste des eaux de lavage. L'eau de la chaîne de lavage EI est un peu plus concentrée en soude et en alumine en raison de l'apport de l'eau issue du patouillage. Cette concentration légèrement plus forte est à l'origine de pertes en soude soluble dans la chaîne de lavage un peu plus grandes: de l'ordre de 283 kg /h alors qu'elles s'élevaient à 202 kg/h environ lorsque les eaux de lavage ne suivaient pas le traitement selon l'invention.

Le bilan est positif puisque:

- les 270 kg/h de soude totale perdue dans le procédé de l'art antérieur sont récupérés en partie dans le cycle Bayer, la perte globale étant ramenée à 81 kg/h environ.
- les 225 kg/h d'alumine perdus dans le procédé d'origine sont réintroduits en majeure partie dans le cycle Bayer. La perte a été réduite à 45 kg/h.
- alors que dans le procédé de l'art antérieur, on perdait - avec l'évacuation de l'imprégnation - 55 kg/h de soude libre, les 320 kg/h de chaux destinés à la désoxalatation ont généré 179 kg/h de soude libre mais l'excès de perte en soude libre au niveau de l'évacuation des résidus insolubles est ici de 51 kg/h: la deuxième utilisation des 320 kg/h de chaux a ainsi occasionné, en plus de la récupération de la soude libre perdue dans l'art antérieur, une génération de 128 kg/h de soude libre.

**AVANTAGES DU PROCEDE SELON L'INVENTION**

- il permet de réduire les pertes en alumine et en soude, entraînées par le procédé de désoxalatation par ajout de chaux dans la liqueur décomposée concentrée de l'art antérieur
- le retour de matières humiques dans le cycle Bayer régularise la concentration en matières humiques de la liqueur d'aluminate, ce qui a un effet bénéfique vis-à-vis du risque de précipitation prématurée des oxalates au cours de la décomposition.
- le procédé permet de soulager le traitement de caustification de la chaîne de lavage lorsqu'on recycle des eaux fortement carbonatées, telles que des eaux de retour de bassin.

**Revendications**

1. Procédé d'élimination de l'oxalate de sodium dans une installation industrielle mettant en oeuvre le procédé Bayer de production d'hydraté d'alumine et utilisant des eaux industrielles, ledit procédé comportant, dans au moins une fraction (L4) de la liqueur d'aluminate Bayer décomposée (L2) prélevée après concentration (V), la précipitation de l'oxalate dissous au moyen d'un agent de déstabilisation à base de chaux (C1) finement divisée puis la séparation (F) des résidus solides de désoxalatation (S4) de la liqueur (L6) recyclée comme liqueur alcaline d'attaque de la bauxite, **caractérisé en ce que** les résidus de désoxalatation (S4) issus de la séparation sont employés pour décarbonater et désoxalater lesdites eaux industrielles.

2. Procédé de désoxalatation selon la revendication 1 où le traitement desdites eaux industrielles est un patouillage avec les résidus (S4) de désoxalatation de la liqueur d'aluminate (L4).

3. Procédé de désoxalatation selon la revendication 2 où les eaux de patouillage ont une concentration en soude totale inférieure à 10 g/l, de préférence inférieure à 3 g/l.

4. Procédé de désoxalatation selon l'une quelconque des revendications 1 à 3 où le taux d'imprégnation des résidus de désoxalatation de la liqueur d'aluminate est inférieur ou égal à 50 %.

5. Procédé de désoxalatation selon l'une quelconque des revendications 2 à 4 dans lequel ledit patouillage est réalisé entre 40 et 60 °C, de préférence au voisinage de 40°C.

6. Procédé de désoxalatation selon l'une quelconque des revendications 1 à 5 où lesdites eaux industrielles regroupent des eaux brutes (EB), des eaux provenant du cycle Bayer telles que des eaux distillées sodiques (EDS), et des eaux de retour de bassin (ERB).

7. Procédé de désoxalatation selon l'une quelconque des revendications 1 à 6 où lesdites eaux industrielles désoxalatées et décarbonatées (EF) sont dirigées vers la chaîne de lavage des résidus insolubles de la chaîne Bayer (LVBR).

8. Procédé de désoxalatation selon l'une quelconque des revendications 2 à 6, où l'on ajoute un floculant (f0) à l'eau de patouillage, dans le but d'améliorer la décantation des produits solides résultant du patouillage.

9. Utilisation des résidus de désoxalatation (S4) d'une liqueur d'aluminate de sodium (L6) d'un circuit Bayer de production d'alumine, lesdits résidus résultant de l'action d'un agent de déstabilisation (C1) à base de chaux finement divisée qui entraîne la précipitation d'oxalate de sodium, **caractérisée en ce qu'**elle permet de décarbonater et de désoxalater les effluents aqueux ayant une teneur en soude totale inférieure à 10 g Na2Otot/litre

10. Utilisation des résidus de désoxalatation (S4) d'une liqueur d'aluminate de sodium (L6) d'un circuit Bayer de production d'alumine, lesdits résidus résultant de l'action d'un agent de déstabilisation (C1) à base de chaux finement divisée qui entraîne la précipitation d'oxalate de sodium, **caractérisée en ce qu'**elle permet de générer de l'hydroxyde de sodium dans une eau carbonatée, tel qu'une eau de retour de bassin ou une eau brute additionnée de carbonate de sodium, ayant une teneur en soude totale inférieure à 10 g Na2Otot/litre

11. Procédé de décarbonatation et de désoxalatation d'effluents aqueux ayant une teneur en soude totale inférieure à 10 g Na2Otot / litre **caractérisé en ce qu'**on utilise lesdits effluents pour laver par patouillage les résidus de désoxalatation (S4) d'une liqueur d'aluminate de sodium (L6) d'un circuit Bayer de production d'alumine, lesdits résidus résultant de l'action d'un agent de déstabilisation (C1) à base de chaux finement divisée ou de produits de réaction de la chaux avec l'aluminate de sodium, tel que l'aluminate tricalcique hexahydraté.

**Patentansprüche**

1. Verfahren zur Entfernung von Natriumoxalat in einer mit dem Bayer-Verfahren zur Gewinnung von Aluminiumhydroxid arbeitenden und industrielle Abwässer verwendenden Industrieanlage, wobei das Verfahren in zumindest einer Fraktion (L4) der zersetzten Bayer-Lauge (L2), die nach erfolgtem Eindicken (V) entnommen wird, die Ausfällung des gelösten Oxalats unter Verwendung eines destabilisierenden Mittels auf Basis von fein verteiltem Kalk (C1) und dann die Abtrennung (F) der festen Oxalatausfällungsrückstände (S4) aus der Lauge (L6) umfasst, welche als alkalische Lauge zum Aufschluss des Bauxits in den Prozess zurückgeführt wird, **dadurch gekennzeichnet, dass** die bei der Abtrennung anfallenden Oxalatausfällungssrückstände (S4) zur Entfernung von Karbonat und Oxalat aus den industriellen Abwässern benutzt werden.

2. Verfahren zur Entfernung von Oxalat nach Anspruch 1, wobei es sich bei der Behandlung der industriellen Abwässer um ein gründliches Waschen mit den Oxalatausfällungsrückständen (S4) der Aluminatlauge (L4) handelt.

3.  Verfahren zur Entfernung von Oxalat nach Anspruch 2, wobei das Waschwasser eine Gesamtkonzentration an Natronlauge von weniger als 10 g/l, vorzugsweise weniger als 3 g/l hat.

4.  Verfahren zur Entfernung von Oxalat nach einem der Ansprüche 1 bis 3, wobei der Imprägnierungsgrad der Oxalatausfällungsrückstände der Aluminatlauge kleiner oder gleich 50 % ist.

5.  Verfahren zur Entfernung von Oxalat nach einem der Ansprüche 2 bis 4, bei dem das Waschen zwischen 40 und 60°C, vorzugsweise bei etwa 40°C erfolgt.

6.  Verfahren zur Entfernung von Oxalat nach einem der Ansprüche 1 bis 5, wobei die industriellen Abwässer Rohwasser (EB), Wasser aus dem Bayer-Prozess, wie z.B. destilliertes natriumhaltiges Wasser (EDS), und Rücklaufwasser aus Becken (ERB) umfassen.

7.  Verfahren zur Entfernung von Oxalat nach einem der Ansprüche 1 bis 6, wobei die oxalat- und karbonatfreien industriellen Abwässer (EF) der Waschstrasse für unlösliche Rückstände des Bayer-Prozesses (LVBR) zugeführt werden.

8.  Verfahren zur Entfernung von Oxalat nach einem der Ansprüche 2 bis 6, wobei dem Waschwasser ein Flockungsmittel (f0) zugesetzt wird, um das Absetzverhalten der beim Waschen entstehenden Feststoffe zu verbessern.

9.  Verwendung der Oxalatausfällungsrückstände (S4) einer Natriumaluminatlauge (L6) eines Bayer-Prozesses zur Gewinnung von Aluminiumhydroxid, wobei die Rückstände durch die Einwirkung eines destabilisierenden Mittels (C1) auf Basis von fein verteiltem Kalk, das zur Ausfällung von Natriumoxalat führt, entstehen, **dadurch gekennzeichnet, dass** sie die Entfernung von Karbonat und Oxalat aus den Abwässern mit einem Gesamtgehalt an Natronlauge von weniger als 10 g Na2O/Liter ermöglicht.

10. Verwendung der Oxalatausfällungsrückstände (S4) einer Natriumaluminatlauge (L6) eines Bayer-Prozesses zur Gewinnung von Aluminiumoxid, wobei die Rückstände durch die Einwirkung eines destabilisierenden Mittels (C1) auf Basis von fein verteiltem Kalk, das zur Ausfällung von Natriumoxalat führt, entstehen, **dadurch gekennzeichnet, dass** sie die Erzeugung von Natriumhydroxid in karbonathaltigem Wasser, wie z.B. Rücklaufwasser aus Bekken oder Rohwasser mit zugesetztem Natriumkarbonat, mit einem Gesamtgehalt an Natronlauge von weniger als 10 g Na2O ermöglicht.

11. Verfahren zur Entfernung von Karbonat und Oxalat aus Abwässern mit einem Gesamtgehalt an Natronlauge von weniger als 10 g Na2O/Liter, **dadurch gekennzeichnet, dass** die Abwässer zum gründlichen Waschen der Oxalatausfällungsrückstände (S4) einer Natriumaluminatlösung (L6) eines Bayer-Prozesses zur Gewinnung von Aluminiumhydroxid verwendet werden, wobei die Rückstände durch die Einwirkung eines destabilisierenden Mittels (C1) auf Basis von fein verteiltem Kalk oder durch Reaktionsprodukte von Kalk mit Natriumaluminat, wie z.B. Tricalciumaluminat-Hexahydrat, entstehen.


**Claims**

1.  Sodium oxalate elimination process in an industrial facility implementing the Bayer alumina hydrate production process and using industrial water, said process comprising, in at least one fraction (L4) of the Bayer aluminate spent liquor (L2) removed after concentration (V), the precipitation of the dissolved oxalate by means of a destabilisation agent (C1) based on lime in the form of a fine powder followed by the separation (F) of the solid deoxalation residue (S4) from the liquor (L6) recycled as a bauxite alkaline digestion liquor, **characterised in that** the deoxalation residue (S4) resulting from the separation is used to decarbonate and deoxalate said industrial water.

2.  Deoxalation process according to claim 1 wherein the treatment of said industrial water consists of mixing it with the aluminate liquor (L4) deoxalation residue (S4) of the aluminate solution (L4) and stirring the resulting mixture in a reaction vessel.

3.  Deoxalation process according to claim 2 wherein the water used for said mixing and stirring in the reaction vessel has a total caustic concentration of less than 10 g/l, preferably less than 3 g/l.

4. Deoxalation process according to any of claims 1 to 3 wherein the impregnation rate of the deoxalation residue of the aluminate liquor is less than or equal to 50%.

5. Deoxalation process according to any of claims 2 to 4 wherein said mixing and stirring in the reaction vessel is carried out between 40 and 60°C, preferably in the vicinity of 40°C.

6. Deoxalation process according to any of claims 1 to 5 wherein said industrial water comprises raw water (EB), water from the Bayer cycle such as alkaline condensates (EDS), and water from the settling pond (ERB).

7. Deoxalation process according to any of claims 1 to 6 wherein said deoxalated and decarbonated industrial water (EF) is routed to the insoluble residue washing line of the Bayer facility (LVBR).

8. Deoxalation process according to any of claims 2 to 6 wherein a flocculant (f0) is added to the water used for mixing and stirring in the reaction vessel, in order to improve the settling of the solid products resulting from the mixing and stirring in the reaction vessel.

9. Use of the sodium aluminate liquor (L6) deoxalation residue (S4) in a Bayer alumina production circuit, said residue resulting from the action of a destabilisation agent (C1) based on lime in the form of fine powder, the action inducing the precipitation of sodium oxalate, said use **characterised in that** it enables the decarbonation and deoxalation of aqueous effluents with a total caustic content of less than 10 g Na2Otot/litre.

10. Use of the sodium aluminate liquor (L6) deoxalation residue (S4) in a Bayer alumina production circuit, said residue resulting from the action of a destabilisation agent (C1) based on lime in the form of fine powder, the action inducing the precipitation of sodium oxalate, said use **characterised in that** it enables the production of sodium hydroxide in carbonated water, such as water from the settling pond or raw water supplemented with sodium carbonate, with a total caustic content of less than 10 g Na2Otot/litre.

11. Decarbonation and deoxalation process for aqueous effluents with a total caustic content of less than 10 g Na2Otot/litre, **characterised in that** said effluents are used for mixing and stirring in a reaction vessel the residue (S4) of the deoxalation of the sodium aluminate liquor (L6) of a Bayer alumina production circuit, said residue resulting from the action of a destabilisation agent (C1) based on lime in the form of fine powder or on lime - sodium aluminate reaction products, such as tricalcium aluminate hexahydrate.

**Fig.1**

**Fig.2**